# EUROPEAN PATENT APPLICATION

(11) **EP 4 756 556 A1**
(43) Date of publication of application: **10.06.2026**
(21) Application number: 24848758.9
(22) Date of filing: 27.06.2024
(51) Int. Cl.: G05D 1/43

(54) **METHOD, SYSTEM, AND MOBILE ROBOT FOR GENERATING ENVIRONMENT MAP**

(30) Priority: 31.07.2023 JP 2023124711
(71) Applicant: OMRON Corporation, Kyoto-shi, Kyoto 600-8530 (JP)
(72) Inventor: FU, Xingdou, Kyoto-shi, Kyoto 600-8530 (JP)
(74) Representative: Appelt, Christian W.
(86) International application number: PCT/JP2024/023319
(87) International publication number: WO 2025/028099

(57) **Abstract**

Provided are a method, a system, and a mobile robot for generating an environment map, each configured to generate a wide and highly accurate environment map at low cost and in a short time. A method according to an aspect of the present invention is a method of generating an environment map by controlling a first mobile robot that is movable and provided with a first detection unit for detecting an environment and generating first environment information and a second mobile robot that is movable and provided with a second detection unit for detecting the environment and generating second environment information. The method includes: causing the first mobile robot to move; generating first environment information by causing the first detection unit of the first mobile robot to detect an environment while the first mobile robot is moving; causing the second mobile robot to move so as to follow the first mobile robot; generating the second environment information by causing the second detection unit of the second mobile robot to detect an environment while the second mobile robot is moving; and generating an environment map based on the first environment information and the second environment information.

## Description

### TECHNICAL FIELD

The present invention relates to a method, a system, and a mobile robot for generating an environment map.

### BACKGROUND OF INVENTION

In order for a mobile robot to autonomously move in an environmental space where humans and other machines are present, the mobile robot itself needs to correctly recognize its own position and posture, and a surrounding environment. In the related art, as a method of performing such recognition, a simultaneous localization and mapping (SLAM) technology for estimating a self-position while creating a map of an environment is known.

For example, Patent Document 1 discloses a robot system that evaluates reliability of a plurality of estimators that performs self-position estimation based on outputs of a plurality of different sensors, and integrates self-position estimation information by the plurality of estimators according to the reliability.

### CITATION LIST

### PATENT LITERATURE

Patent Document 1: JP 2012-248032 A

### SUMMARY

### TECHNICAL PROBLEM

However, since there is a limit to a range detectable by a sensor or the number of sensors that can be provided, there is a case where an omission occurs in a partial area on a constructed map due to occlusion caused by a complicated shape in an environment. Reflective surfaces in the environment may cause omissions or errors in the constructed map. Although it is conceivable to repeat movement and sensing by a mobile robot or to edit a map for these problems, both the measures are time-consuming and cost-intensive.

The present invention provides a method, a system, and a mobile robot for generating an environment map, each configured to generate a wide and highly accurate environment map at low cost and in a short time.

### SOLUTION TO PROBLEM

A method according to an aspect of the present invention is a method of generating an environment map by controlling a first mobile robot that is movable and provided with a first detection unit for detecting an environment and generating first environment information and a second mobile robot that is movable and provided with a second detection unit for detecting an environment and generating second environment information. The method includes: causing the first mobile robot to move; generating the first environment information by causing the first detection unit of the first mobile robot to detect an environment while the first mobile robot is moving; causing the second mobile robot to move so as to follow the first mobile robot; generating the second environment information by causing the second detection unit of the second mobile robot to detect an environment while the first mobile robot is moving; and generating an environment map based on the first environment information and the second environment information.

In this aspect, the environment map is generated based on the first environment information generated by causing the first detection unit provided in the first mobile robot moving in the environment to detect the environment and the second environment information generated by causing the second detection unit provided in the second mobile robot moving in the environment so as to follow the first mobile robot to detect the environment. Therefore, it is possible to generate a wide and highly accurate environment map at low cost and in a short time.

In the above aspect, the step of causing the second mobile robot to move so as to follow the first mobile robot may include acquiring path information regarding a path along which the first mobile robot has moved, generating a path plan for the second mobile robot to move based on the path information, and causing the second mobile robot to move based on the path plan.

In this aspect, since the second mobile robot moves so as to follow the first mobile robot based on the path plan generated based on the path information regarding the path along which the first mobile robot has moved, the accuracy with which the second mobile robot follows the first mobile robot is improved, and the degree of completion of the environment map is improved.

In the above aspect, in the step of acquiring path information regarding a path along which the first mobile robot has moved, the second mobile robot may acquire the path information, and in the step of generating a path plan for the second mobile robot to move based on the path information, the second mobile robot may generate the path plan.

In this aspect, the second mobile robot acquires the path plan generated based on the path information regarding the path along which the first mobile robot has moved and then generates the path plan for the second mobile robot to move based on the path plan, and thus the second mobile robot can be moved to follow the first mobile robot at low cost and in a short time.

In the above aspect, in the step of generating an environment map based on the first environment information and the second environment information, the second mobile robot may acquire the first environment information from the first mobile robot, the second mobile robot may acquire the second environment information from the second detection unit, and the second mobile robot may generate the environment map based on the first environment information and the second environment information, both of which are acquired.

In this aspect, the second mobile robot generates the environment map based on the first environment information acquired from the first mobile robot and the second environment information acquired from the second detection unit, and thus the environment map can be generated at low cost and in a short time.

In the above aspect, in the step of generating an environment map based on the first environment information and the second environment information, the first mobile robot may acquire the second environment information from the second mobile robot, the first mobile robot may acquire the first environment information from the first detection unit, and the first mobile robot may generate the environment map based on the first environment information and second environment information, both of which are acquired.

In this aspect, the first mobile robot generates the environment map based on the first environment information acquired from the first detection unit and the second environment information acquired from the second mobile robot, and thus the environment map can be generated at low cost and in a short time.

In the above aspect, in the step of acquiring path information regarding a path along which the first mobile robot has moved, a server may acquire the path information, in the step of generating a path plan for the second mobile robot to move based on the path information, the server may generate the path plan, and the above aspect may further include causing the server to transmit the path plan to the second mobile robot.

In this aspect, the server acquires the path plan generated based on the path information regarding the path along which the first mobile robot has moved and then generates the path plan for the second mobile robot to move based on the path plan, and thus the second mobile robot can be moved to follow the first mobile robot at low cost and in a short time.

In the above aspect, in the step of generating an environment map based on the first environment information and the second environment information, the server may acquire the first environment information from the first mobile robot, the server may acquire the second environment information from the second mobile robot, and the server may generate the environment map based on the first environment information and the second environment information, both of which are acquired.

In this aspect, the server generates the environment map based on the first environment information acquired from the first mobile robot and the second environment information acquired from the second mobile robot, and thus the environment map can be generated at low cost and in a short time.

In the above aspect, the step of causing the second mobile robot to move so as to follow the first mobile robot may include acquiring position information indicating a position of the first mobile robot by causing a third detection unit provided in the second mobile robot to detect the first mobile robot, generating a path plan for the second mobile robot to move based on the position information, and causing the second mobile robot to move based on the path plan.

In this aspect, since the path plan for the second mobile robot to move is generated based on the position information of the first mobile robot acquired by causing the third detection unit provided in the second mobile robot to detect the first mobile robot, the path plan can be easily generated.

In the above aspect, in the step of causing the second mobile robot to move so as to follow the first mobile robot, the second mobile robot may move such that an orientation of the second detection unit with respect to a moving direction of the second mobile robot is a direction different from an orientation of the first detection unit with respect to a moving direction of the first mobile robot.

In this aspect, since the orientation of the first detection unit provided in the first mobile robot is different from the orientation of the second detection unit provided in the second mobile robot, a range of the first environment information and a range of the second environment information are different from each other, and a degree to which the first environment information and the second environment information complement each other in the environment map is increased.

In the above aspect, in the step of causing the second mobile robot to move so as to follow the first mobile robot, the second mobile robot may move such that the orientation of the second detection unit with respect to the moving direction of the second mobile robot is a direction opposite to the orientation of the first detection unit with respect to the moving direction of the first mobile robot.

In this aspect, since the orientation of the first detection unit provided in the first mobile robot is opposite to the orientation of the second detection unit provided in the second mobile robot are directions, the range of the first environment information and the range of the second environment information are different from each other, and the degree to which the first environment information and the second environment information complement each other in the environment map is increased.

A system according to an aspect of the present invention includes: a first mobile robot that is movable and provided with a first detection unit for detecting an environment and generating first environment information; a second mobile robot that is movable and provided with a second detection unit for detecting an environment and generating second environment information; a first movement control unit configured to control the first mobile robot to move; a first detection control unit configured to control the first detection unit of the first mobile robot to detect an environment while the first mobile robot is moving and to generate the first environment information; a second movement control unit configured to control the second mobile robot to move so as to follow the first mobile robot; a second detection control unit configured to control the second detection unit of the second mobile robot to detect an environment while the first mobile robot is moving and to generate the second environment information; and an environment map generation unit configured to generate an environment map based on the first environment information and the second environment information.

In this aspect, the environment map is generated based on the first environment information generated by causing the first detection unit provided in the first mobile robot moving in the environment to detect the environment and the second environment information generated by causing the second detection unit provided in the second mobile robot moving in the environment so as to follow the first mobile robot to detect the environment. Therefore, a highly accurate environment map can be generated with high accuracy at low cost and in a short time.

A mobile robot according to an aspect of the present invention is a mobile robot that is movable and provided with a detection unit for detecting an environment and generating environment information. The mobile robot includes: a movement control unit configured to control the mobile robot to move so as to follow another mobile robot, the other mobile robot being provided with another detection unit for detecting the environment and generating another environment information and being configured to be movable; a detection control unit configured to control the detection unit of the mobile robot to generate the environment information while the mobile robot is moving; and a supply unit configured to supply the environment information generated to an environment map generation unit for generating an environment map based on the environment information and the other environment information.

In this aspect, the environment map is generated based on the other environment information generated by causing the other detection unit provided in the other mobile robot moving in the environment to detect the environment and the environment information generated by causing the detection unit provided in the mobile robot moving in the environment so as to follow the other mobile robot to detect the environment. Therefore, a highly accurate environment map can be generated with high accuracy at low cost and in a short time.

### ADVANTAGEOUS EFFECTS OF INVENTION

The present invention provides a method, a system, and a mobile robot for generating an environment map, each configured to generate a wide and highly accurate environment map at low cost and in a short time.

### BRIEF DESCRIPTION OF THE DRAWINGS

FIG. 1 is a diagram for describing an overview of an environment map generating system 1 according to the present embodiment.
FIG. 2 is a schematic diagram illustrating an example of a functional formation of the environment map generating system 1 according to a first embodiment.
FIG. 3 is a diagram illustrating an example of an operation flow indicating operation performed by the environment map generating system 1 according to the first embodiment.
FIG. 4 is a diagram illustrating an example of map information ML.
FIG. 5 is a diagram illustrating an example of map information MF.
FIG. 6 is a diagram illustrating an example of synthesized map information MA.
FIG. 7 is a schematic diagram illustrating an example of a functional formation of an environment map generating system 2 according to a second embodiment.
FIG. 8 is a diagram illustrating an example of an operation flow indicating operation performed by the environment map generating system 2 according to the second embodiment.
FIG. 9 is a schematic diagram illustrating an example of a functional formation of an environment map generating system 3 according to a third embodiment.
FIG. 10 is a diagram illustrating an example of an operation flow indicating operation performed by the environment map generating system 3 according to the third embodiment.
FIG. 11 is a schematic diagram illustrating an example of a functional formation of an environment map generating system 4 according to a fourth embodiment.
FIG. 12 is a diagram illustrating an example of an operation flow indicating operation performed by the environment map generating system 4 according to the fourth embodiment.

### DESCRIPTION OF EMBODIMENTS

A preferred embodiment of the present invention will be described with reference to the attached drawings. (In the drawings, components denoted by the same reference signs have the same or similar configurations.)

### (1) First Embodiment

### (1-1) Overview

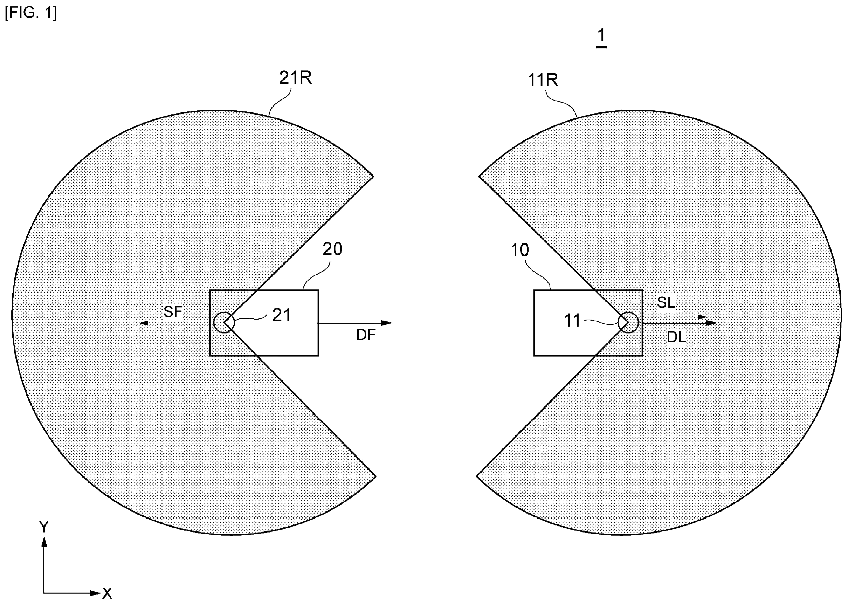

FIG. 1 is a diagram for describing an overview of an environment map generating system 1 according to the present embodiment. The environment map generating system includes, for example, a first mobile robot 10 and a second mobile robot 20. The environment map generating system 1 controls the first mobile robot 10 and the second mobile robot 20 to generate an environment map.

Both the first mobile robot 10 and the second mobile robot 20 are so-called self-propelled robots that move by autonomously traveling on a floor surface as a traveling surface. In FIG. 1, the traveling surface (movement surface) is represented as a surface substantially parallel to an XY plane defined by an X-axis and a Y-axis. The self-propelled type is not limited to a type of traveling completely autonomously, and may include a type of traveling by being remotely operated by an external device such as a remote controller.

The first mobile robot 10 is provided with an external sensor 11 for detecting an environment and generating map information ML (an example of "first environment information") and is configured to be movable. In FIG. 1, a moving direction of the first mobile robot 10 is represented by a solid line DL, and an orientation of the external sensor 11 is represented by a dotted line SL. The external sensor 11 is, for example, configured to detect an environment in a direction of a predetermined first range with respect to the external sensor 11. FIG. 1 illustrates a first range 11R with about 270 degrees around an orientation SL of the external sensor 11 as an example of the first range. The angle of the first range 11R is not limited to about 270 degrees, and may be an optional value. The external sensor 11 is configured to detect an environment in a direction of the first range 11R. When the first mobile robot 10 moves in an environment, the external sensor 11 detects the environment in the direction of the first range 11R, and the map information ML is generated based on a result of the detection.

The second mobile robot 20 is provided with an external sensor 21 for detecting an environment and generating map information MF (an example of "second environment information") and is configured to be movable. In FIG. 1, a moving direction of the second mobile robot 20 is represented by a solid line DF, and an orientation of the external sensor 21 is represented by a dotted line SF. The external sensor 21 is, for example, configured to detect an environment in a direction of a predetermined second range with respect to the external sensor 21. FIG. 1 illustrates a second range 21R with about 270 degrees around the orientation SF of the external sensor 21 as an example of the second range. The angle of the second range 21R is not limited to about 270 degrees, and may be an optional value. The external sensor 21 is configured to detect an environment in the direction of the second range 21R. When the second mobile robot 20 moves in an environment so as to follow the first mobile robot 10, the external sensor 21 detects the environment in the direction of the second range 21R, and the map information MF is generated based on a result of the detection.

The environment map generating system 1 generates synthesized map information MA (an example of an "environment map") based on the map information ML and the map information MF. In the environment map generating system 1, for example, the second mobile robot 20 acquires the map information ML from the first mobile robot 10 and synthesizes the map information ML and the map information MF generated based on the detection result of the external sensor 21 to generate the synthesized map information MA.

As described above, in the environment map generating system, the first mobile robot 10 moves in the environment, and additionally the second mobile robot 20 moves in the environment so as to follow the first mobile robot 10. The synthesized map information MA is generated based on the map information ML generated by the external sensor 11 provided in the first mobile robot 10 and the map information MF generated by the external sensor 21 provided in the second mobile robot 20. Therefore, a wide and highly accurate environment map can be generated at low cost and in a short time.

In the present disclosure, posture information, path information, and map information may be simply referred to as, for example, "posture", "path", and "map", respectively.

### (1-2) Formation

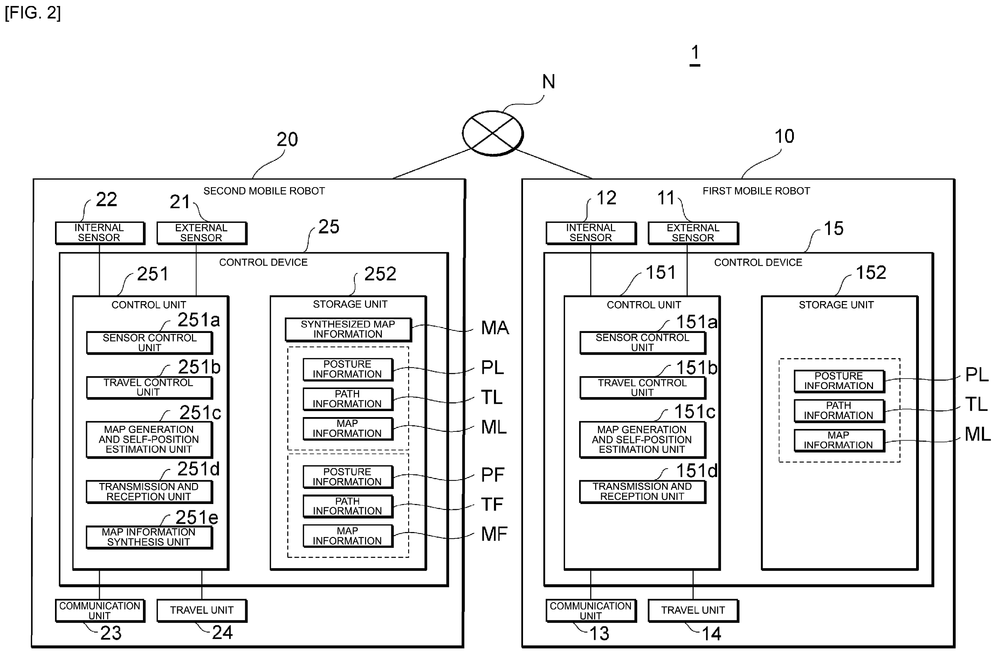

FIG. 2 is a schematic diagram illustrating an example of a functional formation of the environment map generating system 1 according to the first embodiment. The first mobile robot 10 and the second mobile robot 20 are connected via a communication network N, such as Wi-Fi (trade name) or Bluetooth (trade name), each configured to transmit and receive information to and from each other.

In the environment map generating system 1 according to the first embodiment, the second mobile robot 20 acquires path information TL of the first mobile robot 10, and then generates a path plan of the second mobile robot 20 so as to follow the first mobile robot 10. In the environment map generating system 1 according to the first embodiment, the second mobile robot 20 acquires the map information ML and the map information MF, and then generates the synthesized map information MA based on the map information.

### (1-2-1) Formation of First Mobile Robot 10

The first mobile robot 10 includes the external sensor 11, an internal sensor 12, a communication unit 13, a travel unit 14, and a control device 15.

The external sensor 11 is a sensor that detects information regarding a surrounding environment of the first mobile robot 10. The external sensor 11 detects, for example, information regarding a position of the surrounding environment, a two-dimensional shape or a three-dimensional shape, and a color and a material. The external sensor 11 may be composed of a sensor such as a laser range finder (LRF), a laser imaging detection and ranging (LIDAR), a camera, a depth camera, a stereo camera, a sonar, or a RADAR, or a combination of all of these. The number and disposition positions of the external sensors 11 included in the first mobile robot 10 are not particularly limited. The external sensor 11 may be disposed at an optional position such as a front side, a rear side, or a side surface side of the first mobile robot 10. The external sensor 11 is, for example, provided on the first mobile robot 10 so as to face a predetermined direction SL and is configured to detect the environment in the direction of the predetermined first range 11R with respect to the external sensor 11 (see FIG. 1).

The internal sensor 12 is a sensor that detects information regarding a position and posture of the first mobile robot 10. The internal sensor 12 is, for example, configured to detect at least one of absolute values of three direction components (for example, an X-axis direction component, a Y-axis direction component, and a Z-axis direction component of an X-Y-Z orthogonal coordinate system) of each of a movement distance, a speed, an acceleration, an angular velocity, and posture of the first mobile robot 10. The internal sensor 12 may be composed of a sensor such as an acceleration sensor, an angular velocity sensor, an encoder, a geomagnetic sensor, an atmospheric pressure/water pressure sensor, or a torque sensor, or a combination thereof.

The communication unit 13 is a wireless communication module (also referred to as a communication circuit) for the first mobile robot 10 to perform wireless communication with other devices such as the second mobile robot 20 via the communication network N. Communication standards used for the communication are not particularly limited, and may be, for example, Wi-Fi (trade name), Bluetooth (trade name), or the like.

The travel unit 14 is a unit for causing the first mobile robot 10 to travel (move) and may include, for example, at least one wheel and an actuator that applies power to the wheel. The actuator drives, for example, the wheel or the like based on a control command from a travel control unit 151b, and thus the first mobile robot 10 moves.

The control device 15 is a computer including a central processing unit (CPU), a storage device (composed of a storage device such as a random access memory (RAM), a read only memory (ROM), a hard disk drive (HDD), or a solid state drive (SSD)), and various interfaces. The control device 15 includes a control unit 151 and a storage unit 152. Some or all of respective functional units included in the control unit 151 described below may be achieved by executing a predetermined program stored in the above-described storage device. Alternatively, some or all of the respective functional units included in the control unit 151 may be achieved by hardware such as a custom IC.

The control unit 151 includes a sensor control unit 151a, the travel control unit 151b, a map information generation and self-position estimation unit 151c, and a transmission and reception unit 151d.

The sensor control unit 151a controls the external sensor 11 and the internal sensor 12, and generates a detection result of each sensor. For example, the sensor control unit 151a forms a first detection unit together with the external sensor 11, and generates the map information ML based on a detection signal supplied from the external sensor 11. The sensor control unit 151a may control the external sensor 11. For example, the sensor control unit 151a may control the orientation SL of the external sensor 11 and/or a size of the first range 11R.

The travel control unit 151b generates a path plan for the first mobile robot 10, and then controls the travel unit 14 based on the path plan to move the first mobile robot 10. A method of generating the path plan is not particularly limited, but, for example, the travel control unit 151b may generate the path plan using the map information ML saved in the storage unit 152 and information of a self-position of the first mobile robot 10 estimated by the map generation and self-position estimation unit 151c. The travel control unit 151b may generate the path plan based on a set operation mode. The operation mode may be optionally set, and may be, for example, a "free mode" for random movement, a "map creation mode" for expanding a map creation range, a "movement destination designation mode" for movement to a designated place, or the like. The travel control unit 151b generates a control signal based on the generated path plan, and supplies the control signal to the actuator included in the travel unit 14, thereby driving the wheel and the like to move the first mobile robot 10.

The map generation and self-position estimation unit 151c acquires at least one of the absolute values of the three direction components of each of the movement distance, the speed, the acceleration, the angular velocity, and the posture of the first mobile robot 10 obtained from the internal sensor 12. The map generation and self-position estimation unit 151c acquires the information on the surrounding environment of the first mobile robot 10 from the external sensor 11. The map generation and self-position estimation unit 151c performs estimation of the self-position of the first mobile robot 10 and generation of map information from the acquired information by filtering processing. The filtering processing may be configured by each method of a Kalman filter, an extended Kalman filter, an Unsented Kalman filter, a particle filter, and a Rao-Blackwellized particle filter.

Posture information PL and the path information TL are generated by the estimation of the self-position. The map information ML is generated by the generation of the map information. Here, the posture information PL may include the position (coordinates) and an orientation of the first mobile robot 10. The path information TL may include information indicating a path along which the first mobile robot 10 has moved. The map information ML may include environment map information.

The map generation and self-position estimation unit 151c saves the generated posture information PL, path information TL, and map information ML in the storage unit 152. When the corresponding posture information PL, path information TL, and map information ML are already present, the map information saved in the storage unit 152 is used together to update the map information, and the updated map information is saved in the storage unit 152.

The transmission and reception unit 151d transmits and receives information to and from other devices such as the second mobile robot 20 via the communication unit 13 and the communication network N. The transmission and reception unit 151d may transmit, for example, the posture information PL, the path information TL, and/or the map information ML to the second mobile robot 20.

The storage unit 152 stores various programs for controlling the first mobile robot 10 and various types of data. The storage unit stores, for example, the posture information PL, the path information TL, and/or the map information ML generated by the map generation and self-position estimation unit 151c and the like.

### (1-2-2) Formation of Second Mobile Robot 20

The second mobile robot 20 includes the external sensor 21, an internal sensor 22, a communication unit 23, a travel unit 24, and a control device 25.

The external sensor 21 is a sensor that detects information regarding a surrounding environment of the second mobile robot 20. The external sensor 21 detects, for example, information regarding a position of the surrounding environment, a two-dimensional shape or a three-dimensional shape, and a color and a material. The external sensor 21 may be composed of a sensor such as a laser range finder (LRF), a laser imaging detection and ranging (LIDAR), a camera, a depth camera, a stereo camera, a sonar, or a RADAR, or a combination of all of these. The number and disposition positions of the external sensors 21 included in the second mobile robot 20 are not particularly limited. The external sensor 21 may be disposed at an optional position such as a front side, a rear side, or a side surface side of the second mobile robot 20. The external sensor 21 is, for example, provided on the second mobile robot 20 so as to face the predetermined direction SF and is configured to detect the environment in the direction of the predetermined second range 21R with respect to the external sensor 21 (see FIG. 1).

The internal sensor 22 is a sensor that detects information regarding a position and posture of the second mobile robot 20. The internal sensor 22 is, for example, configured to detect at least one of absolute values of three direction components (for example, an X-axis direction component, a Y-axis direction component, and a Z-axis direction component of the X-Y-Z orthogonal coordinate system) of each of a movement distance, a speed, an acceleration, an angular velocity, and posture of the second mobile robot 20. The internal sensor 22 may be composed of a sensor such as an acceleration sensor, an angular velocity sensor, an encoder, a geomagnetic sensor, an atmospheric pressure/water pressure sensor, or a torque sensor, or a combination thereof.

The communication unit 23 is a wireless communication module (also referred to as a communication circuit) for the second mobile robot 20 to perform wireless communication with other devices such as the first mobile robot 10 via the communication network N. Communication standards used for the communication are not particularly limited, and may be, for example, Wi-Fi (trade name), Bluetooth (trade name), or the like.

The travel unit 24 is a unit for causing the second mobile robot 20 to travel (move), and may include, for example, at least one wheel and an actuator that applies power to the wheel. The actuator drives, for example, the wheel or the like based on a control command from a travel control unit 251b, and thus the second mobile robot 20 moves.

The control device 25 is a computer including a central processing unit (CPU), a storage device (composed of a storage device such as a random access memory (RAM), a read only memory (ROM), a hard disk drive (HDD), or a solid state drive (SSD)), and various interfaces. The control device 25 includes a control unit 251 and a storage unit 252. Some or all of respective functional units included in the control unit 251 described below may be achieved by executing a predetermined program stored in the above-described storage device. Alternatively, some or all of the respective functional units included in the control unit 251 may be achieved by hardware such as a custom IC.

The control unit 251 includes a sensor control unit 251a, the travel control unit 251b, a map information generation and self-position estimation unit 251c, a transmission and reception unit 251d, and a map information synthesis unit 251e.

The sensor control unit 251a controls the external sensor 21 and the internal sensor 22, and generates a detection result of each sensor. For example, the sensor control unit 251a forms a second detection unit together with the external sensor 21, and generates the map information MF based on a detection signal supplied from the external sensor 21. The sensor control unit 251a may control the external sensor 21. For example, the sensor control unit 251a may control the orientation SF of the external sensor 21 and/or a size of the second range 21R. In particular, when the second mobile robot 20 moves so as to follow the first mobile robot 10, the sensor control unit 251a may control the orientation SF of the external sensor 21 and/or the size of the second range 21R so that the second range 21R in which the external sensor 21 included in the second mobile robot 20 detects the environment includes a range that is not included in the first range 11R in which the external sensor 11 included in the first mobile robot 10 detects the environment.

The travel control unit 251b generates a path plan for the second mobile robot 20, and then controls the travel unit 24 based on the path plan to move the second mobile robot 20. In particular, the travel control unit 251b moves the second mobile robot 20 so as to follow the first mobile robot 10. Therefore, the travel control unit 251b acquires, for example, the path information TL regarding the path along which the first mobile robot 10 has moved, and generates the path plan for the second mobile robot 20 based on at least the path information TL. The path plan may be generated further based on the map information MF saved in the storage unit 252 and information of a self-position of the second mobile robot 20 estimated by the map generation and self-position estimation unit 251c.

Here, the following of the first mobile robot 10 is not limited to following along a path that completely coincides with the path along which the first mobile robot 10 has moved, and may include moving along a path that is within a range separated by a predetermined distance from the path along which the first mobile robot 10 has moved. The predetermined distance may be stored in the storage unit 252 or the like as, for example, a value defined in advance. The value may be set according to, for example, a mode of the first mobile robot 10, a mode of the second mobile robot 20, and the like. The travel control unit 251b may calculate and update the predetermined distance according to detection results of the external sensor 21 and the internal sensor 22.

The travel control unit 251b may move the second mobile robot 20 so that the second range 21R in which the external sensor 21 included in the second mobile robot 20 detects the environment includes a range that is not included in the first range 11R in which the external sensor 11 included in the first mobile robot 10 detects the environment.

For example, when the size of the first range 11R of the external sensor 11 and the size of the second range 21R of the external sensor 21 are equal to each other, the travel control unit 251b may move the second mobile robot 20 so that the orientation of the external sensor 21 with respect to the moving direction of the second mobile robot 20 is a direction different from the orientation of the external sensor 11 with respect to the moving direction of the first mobile robot 10. For example, in FIG. 1, the moving direction of the first mobile robot 10, the orientation of the external sensor 21, the moving direction of the second mobile robot 20, and the orientation of the external sensor 21 are represented by a solid arrow DL, a dotted arrow SL, a solid arrow DF, and a dotted arrow SF, respectively. As illustrated in FIG. 1, an angle between the moving direction DL of the first mobile robot 10 and the orientation SL of the external sensor 11 is substantially 0 degrees. As illustrated in FIG. 1, an angle between the moving direction DF of the second mobile robot 20 and the orientation SF of the external sensor 21 is substantially 180 degrees. Therefore, the orientation of the external sensor 21 with respect to the moving direction of the second mobile robot 20 is different from the orientation of the external sensor 11 with respect to the moving direction of the first mobile robot 10.

As described above, in the environment map generating system 1 according to the present embodiment, the second mobile robot 20 is movable so as to follow the first mobile robot 10, and thus the moving direction DF of the second mobile robot 20 when passing through an optional position can be substantially equal to the moving direction DL of the first mobile robot 10 when passing through the position. In this case, as described above, the second mobile robot 20 moves so that the orientation of the external sensor 21 with respect to the moving direction of the second mobile robot 20 is a direction different from the orientation of the external sensor 11 with respect to the moving direction of the first mobile robot 10. As a result, the orientation of the external sensor 11 included in the first mobile robot 10 when passing through an optional position is different from the orientation of the external sensor 21 included in the second mobile robot 20, and the second range R21 of the external sensor 21 includes a range that is not included in the first range R11 of the external sensor 11. Therefore, the map information ML and the map information MF that serve as a base of the synthesized map information MA can complement each other in terms of imaging region range, and the like.

The travel control unit 251b included in the second mobile robot 20 may move the second mobile robot 20 so that a difference between the angle between the moving direction DL of the first mobile robot 10 and the orientation SL of the external sensor 11 and the angle between the moving direction DF of the second mobile robot 20 and the orientation SF of the external sensor 21 becomes a predetermined value. The predetermined value may be an optional value, and may be, for example, an optional value between 0 degrees and 45 degrees, 45 degrees, an optional value between 45 degrees and 90 degrees, 90 degrees, or an optional value between 90 degrees and 180 degrees. The travel control unit 251b may change the predetermined value based on various parameters. For example, the travel control unit 251b may change the predetermined value according to a mode set by a user (a mode regarding accuracy of an environment map to be generated, or the like). For example, the travel control unit 251b may change the predetermined value according to the generated and acquired data (for example, posture information PF, path information TF, the map information MF, the posture information PL, the path information TL, the map information ML, and the synthesized map information MA).

For example, when the size of the second range 21R of the external sensor 21 is smaller than the size of the first range 11R of the external sensor 11, the travel control unit 251b may move the second mobile robot so that the second range 21R includes a range that is not included in the first range 11R.

For example, when the size of the second range 21R is larger than the size of the first range 11R, the second range 21R includes a range that is not included in the first range 11R regardless of the orientation SF of the external sensor 21, and thus the travel control unit 251b may optionally move the second mobile robot.

The map generation and self-position estimation unit 251c acquires at least one of the absolute values of the three direction components of each of the movement distance, the speed, the acceleration, the angular velocity, and the posture of the second mobile robot 20 obtained from the internal sensor 22. The map generation and self-position estimation unit 251c acquires the information on the surrounding environment of the second mobile robot 20 from the external sensor 21. The map generation and self-position estimation unit 251c performs estimation of the self-position of the second mobile robot 20 and generation of map information from the acquired information by filtering processing. The filtering processing may be composed of each method of a Kalman filter, an extended Kalman filter, an Unsented Kalman filter, a particle filter, and a Rao-Blackwellized particle filter.

The posture information PF and the path information TF are generated by the estimation of the self-position. The map information MF is generated by the generation of the map information. Here, the posture information PF may include the position (coordinates) and an orientation of the second mobile robot 20. The path information TF may include information indicating a path along which the second mobile robot 20 has moved. The map information MF may include environment map information.

The map generation and self-position estimation unit 251c saves the generated posture information PF, path information TF, and map information MF in the storage unit 252. When the corresponding posture information PF, path information TF, and map information MF are already present, the map information saved in the storage unit 252 is used together to update the map information, and the updated map information is saved in the storage unit 252. The map generation and self-position estimation unit 251c, as an example of a supply unit, supplies the map information MF to the map information synthesis unit 251e.

The transmission and reception unit 251d transmits and receives information to and from other devices such as the first mobile robot 10 via the communication unit 23 and the communication network N. The transmission and reception unit 251d may receive, for example, the posture information PL, the path information TL, and/or the map information ML from the first mobile robot 10.

The map information synthesis unit 251e generates the synthesized map information MA based on the map information ML and the map information MF. The map information synthesis unit 251e generates the synthesized map information MA by, for example, synthesizing the map information ML and the map information MF. For example, a known point group matching technique such as an iterative closest point (ICP) algorithm may be used for the synthesis of the map information ML and the map information MF. In the generation of the synthesized map information MA, the posture information PL and the posture information PF may be converted into the same coordinate system. In the generation of the synthesized map information MA, the path information TL and the path information TF may be converted into the same coordinate system.

The storage unit 252 stores various programs for controlling the second mobile robot 20 and various types of data. The storage unit 252 stores, for example, the posture information PF, the path information TF, and/or the map information MF generated by the map generation and self-position estimation unit 251c and the like. The storage unit 252 stores, for example, the posture information PL, the path information TL, and/or the map information ML received from the first mobile robot 10. The storage unit 252 stores, for example, the synthesized map information MA generated by the map information synthesis unit 251e and the like.

### (1-3) Operation

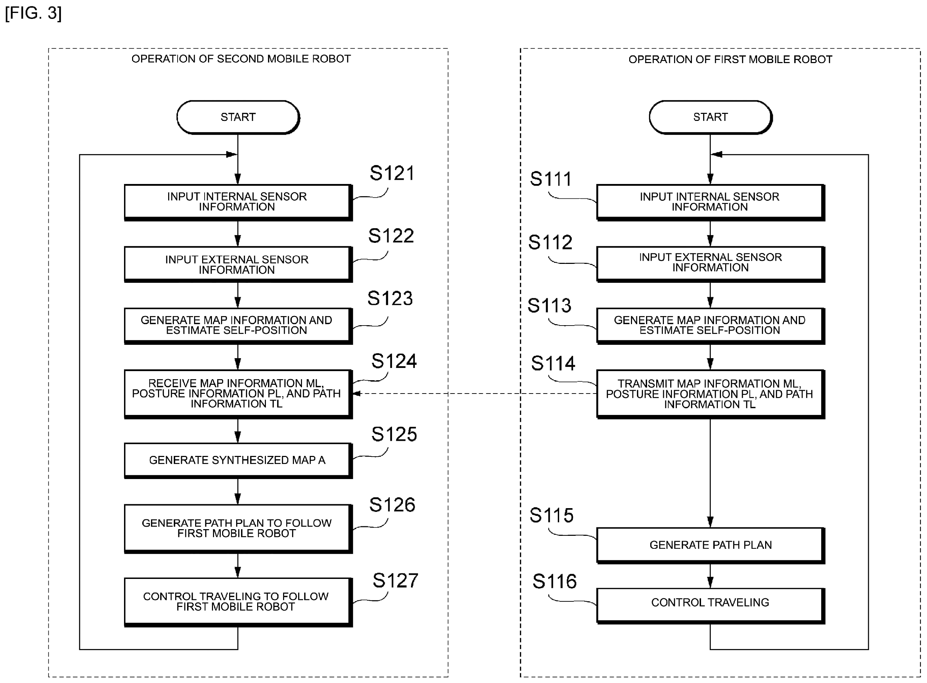

FIG. 3 is a diagram illustrating an example of an operation flow indicating operation performed by the environment map generating system 1 according to the first embodiment. The operation flow includes an operation flow indicating operation performed by the first mobile robot 10 and an operation flow indicating operation performed by the second mobile robot 20.

### (1-3-1) Operation of First Mobile Robot 10

First, the operation performed by the first mobile robot 10 will be described.

First, in step S111, the internal sensor 12 acquires information regarding a position and posture of the first mobile robot 10. Here, the information to acquire may include, for example, absolute values of three direction components of each of a movement distance, a speed, an acceleration, an angular velocity, and posture of the first mobile robot 10, and the like.

Next, in step S112, the external sensor 11 acquires information regarding a surrounding environment of the first mobile robot 10. Here, the information to acquire includes information regarding a position of the surrounding environment, and information regarding a two-dimensional shape or a three-dimensional shape, and color and material.

Next, in step S113, the map generation and self-position estimation unit 151c performs generation of map information and estimation of a self-position of the first mobile robot 10 using the information acquired by the external sensor 11 and the information acquired by the internal sensor 12. As a result, the posture information PL, the path information TL, and the map information ML for the first mobile robot 10 are generated.

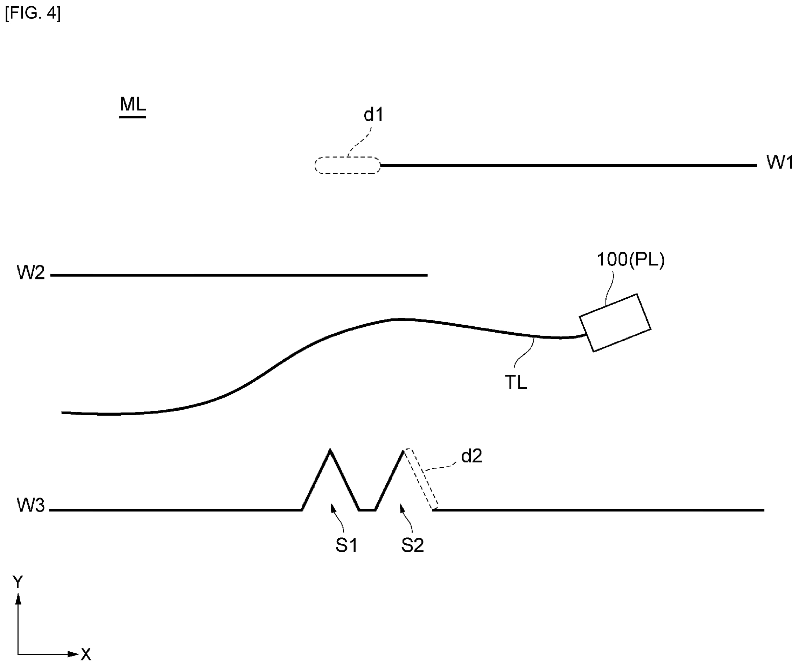

The posture information PL, the path information TL, and the map information ML will be described with reference to FIG. 4. FIG. 4 illustrates the map information ML in a case where the first mobile robot 10 moves along the path TL to the position PL while detecting walls W1, W2, and W3 by the external sensor 11. In FIG. 4, the walls W1, W2, and W3 detected by the external sensor 11 and the path TL are indicated by solid lines. At this time, as illustrated in FIG. 4, it is assumed that an omission d1 occurs due to the angle of the external sensor 11 in the detection of the wall W1 by the external sensor 11. The wall W3 is provided with protrusions S1 and S2. At this time, as illustrated in FIG. 4, it is assumed that an omission d2 occurs due to reflection of light by the protrusion S2 in the detection of the wall W3 by the external sensor 11.

Next, in step S114, the transmission and reception unit 151d transmits the posture information PL, the path information TL, and the map information ML for the first mobile robot 10 that are generated to the second mobile robot 20.

Next, in step S115, the travel control unit 151b generates a path plan of the first mobile robot 10. For example, the travel control unit 151b may generate the path plan using the map information ML saved in the storage unit 152 and information of the self-position of the first mobile robot 10 estimated by the map generation and self-position estimation unit 151c.

Next, in step S116, the travel control unit 151b controls the travel unit 14 to move the first mobile robot 10 based on the path plan generated in step S115. Thereafter, steps S111 to S116 are repeated until a predetermined end condition is satisfied.

### (1-3-2) Operation of Second Mobile Robot 20

Next, the operation performed by the second mobile robot 20 will be described.

First, in step S121, the internal sensor 22 acquires information regarding a position and posture of the second mobile robot 20. Here, the information to acquire may include, for example, absolute values of three direction components of each of a movement distance, a speed, an acceleration, an angular velocity, and posture of the second mobile robot 20.

Next, in step S122, the external sensor 21 acquires information regarding a surrounding environment of the second mobile robot 20. Here, the information to acquire includes information regarding a position of the surrounding environment, and information regarding a two-dimensional shape or a three-dimensional shape, and color and material.

Next, in step S123, the map generation and self-position estimation unit 251c performs generation of map information and estimation of a self-position of the second mobile robot 20 using the information acquired by the external sensor 21 and the information acquired by the internal sensor 22. As a result, the posture information PF, the path information TF, and the map information MF for the second mobile robot 20 are generated.

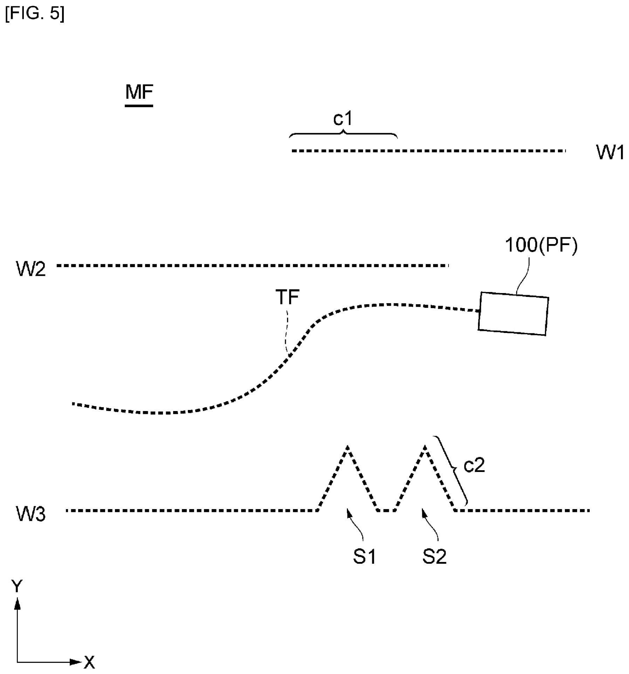

The posture information PF, the path information TF, and the map information MF will be described with reference to FIG. 5. FIG. 5 illustrates the map information MF in a case where the second mobile robot 20 moves along the path TF to the position PF while detecting the walls W1, W2, and W3 by the external sensor 21. In FIG. 5, the walls W1, W2, and W3 detected by the external sensor 21 and the path TF are indicated by dotted lines. At this time, as indicated by a reference sign c1 in FIG. 5, it is assumed that no omission due to the angle of the external sensor 21 occurs in the detection of the wall W1 by the external sensor 21. In addition, at this time, as indicated by a reference sign c2 in FIG. 5, it is assumed that, in the detection of the wall W3 by the external sensor 21, no omission due to reflection of light occurs also for the protrusion S2.

Next, in step S124, the transmission and reception unit 251d receives the posture information PL, the path information TL, and the map information ML for the first mobile robot 10 transmitted from the first mobile robot 10 in step S114.

Next, in step S125, the map information synthesis unit 251e generates the synthesized map information MA based on the map information ML generated by the first mobile robot 10 and the map information MF generated by the second mobile robot 20. For example, a known point group matching technique such as an iterative closest point (ICP) algorithm may be used for the synthesis of the map information ML and the map information MF. In the generation of the synthesized map information MA, the posture information PL and the posture information PF may be converted into the same coordinate system. In the generation of the synthesized map information MA, the path information TL and the path information TF may be converted into the same coordinate system.

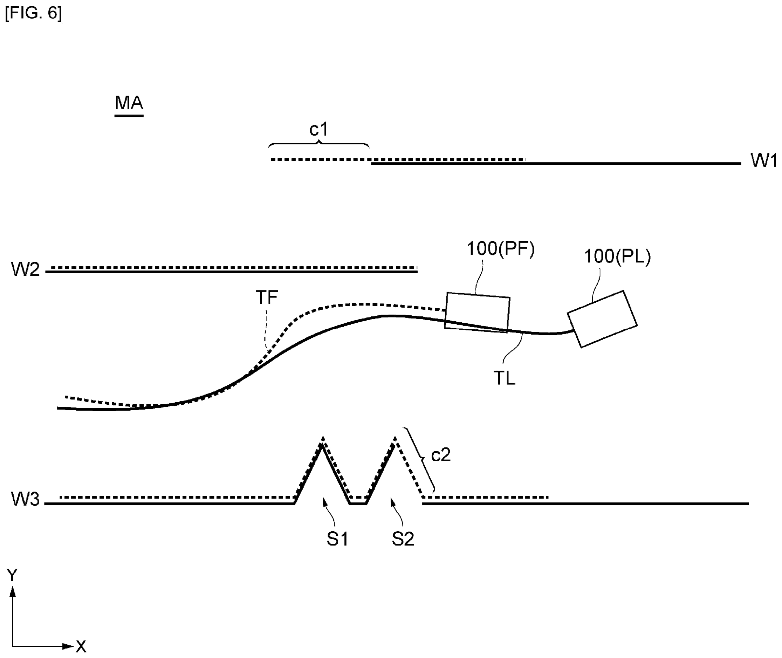

FIG. 6 illustrates the synthesized map information MA. The walls W1, W2, and W3 detected by the external sensor 11 and the path TL are indicated by solid lines. The walls W1, W2, and W3 detected by the external sensor 21 and the path TF are indicated by dotted lines. As illustrated in FIG. 6, in the synthesized map information MA, the walls W1, W2, and W3 detected by the external sensor 11 and the walls W1, W2, and W3 detected by the external sensor 21 are disposed so as to coincide with or be close to each other. As described above, it is assumed that, in the detection of the wall W1 by the external sensor 11, the omission d1 due to the angle of the external sensor 11 occurs (FIG. 4), and on the other hand, in the detection of the wall W1 by the external sensor 21, due to the angle of the external sensor 21, no omission occurs (FIG. 5). As for the omission portion, as indicated by the reference sign c1 in FIG. 6, in the synthesized map information MA, the omission d1 in the detection of the wall W1 by the external sensor 11 is complemented by the detection of the wall W1 by the external sensor 21. Additionally, as described above, it is assumed that, in the detection of the wall W3 by the external sensor 11, the omission d2 due to the reflection of light by the protrusion S2 occurs (FIG. 4), and on the other hand, in the detection of the wall W3 by the external sensor 21, due to the angle of the external sensor 21, no omission occurs (FIG. 5). As for the omission portion, as indicated by the reference sign c2 in FIG. 6, in the synthesized map information MA, the omission d2 in the detection of the wall W1 by the external sensor 11 is to be complemented by the detection of the wall W1 by the external sensor 21.

Next, in step S126, the travel control unit 251b generates a path plan of the second mobile robot 20. In particular, the travel control unit 251b generates the path plan for causing the second mobile robot 20 to move so as to follow the first mobile robot 10 based on the path information TL of the first mobile robot 10 acquired in step S124.

Next, in step S127, the travel control unit 251b controls the travel unit 24 to move the second mobile robot 20 based on the path plan generated in step S126. At this time, the travel control unit 251b may move the second mobile robot 20 so that the second range 21R in which the external sensor 21 included in the second mobile robot 20 detects an environment includes a range that is not included in the first range 11R in which the external sensor 11 included in the first mobile robot 10 detects the environment. At this time, when the second mobile robot 20 moves so as to follow the first mobile robot 10, the sensor control unit 251a may control the orientation SF of the external sensor 21 and/or the size of the second range 21R so that the second range 21R in which the external sensor 21 included in the second mobile robot 20 detects the environment includes a range that is not included in the first range 11R in which the external sensor 11 included in the first mobile robot 10 detects the environment. Thereafter, steps S121 to S127 are repeated until a predetermined end condition is satisfied.

### (2) Second Embodiment

### (2-1) Formation

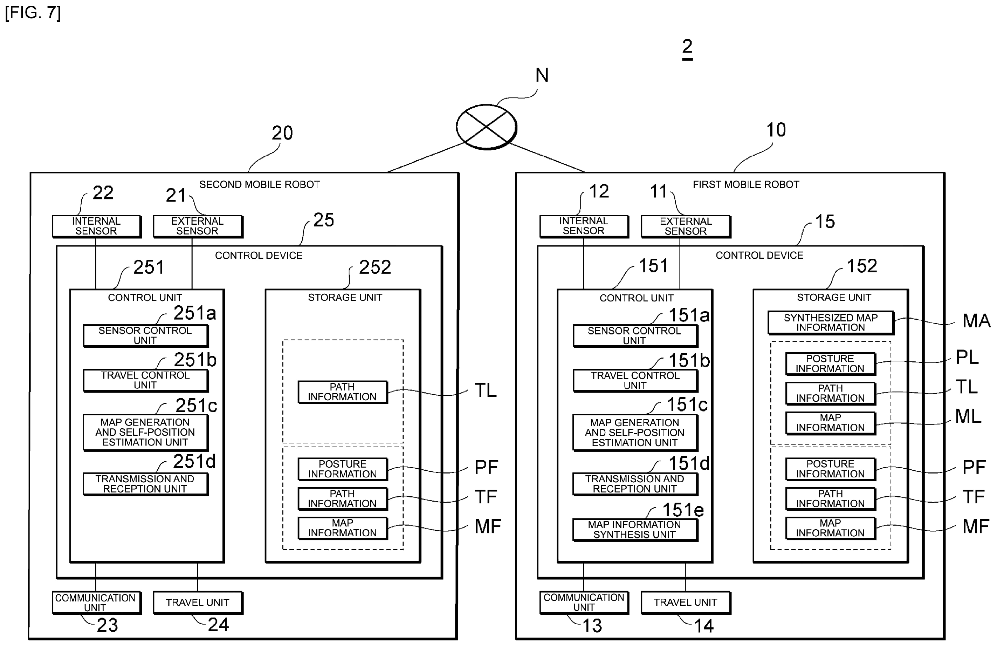

FIG. 7 is a schematic diagram illustrating an example of a functional formation of an environment map generating system 2 according to a second embodiment. Hereinafter, the environment map generating system 2 according to the second embodiment will be described with respect to parts different from those of the environment map generating system 2 according to the first embodiment, and the description of parts similar to those of the environment map generating system 1 according to the first embodiment will be omitted as appropriate. In the environment map generating system 1 according to the second embodiment, the first mobile robot 10 acquires the map information ML and the map information MF, and then generates the synthesized map information MA based on the map information.

### (2-1-1) Formation of First Mobile Robot 10

The transmission and reception unit 151d may receive, for example, the posture information PF, the path information TF, and/or the map information MF from the second mobile robot 20.

The first mobile robot 10 includes a map information synthesis unit 151e. The map information synthesis unit 151e generates the synthesized map information MA based on the map information ML and the map information MF. The map information synthesis unit 151e generates the synthesized map information MA by, for example, synthesizing the map information ML and the map information MF. For example, a known point group matching technique such as an iterative closest point (ICP) algorithm may be used for the synthesis of the map information ML and the map information MF. In the generation of the synthesized map information MA, the posture information PL and the posture information PF may be converted into the same coordinate system. In the generation of the synthesized map information MA, the path information TL and the path information TF may be converted into the same coordinate system.

The storage unit 152 stores, for example, the posture information PL, the path information TL, and/or the map information ML generated by the map generation and self-position estimation unit 151c and the like. The storage unit 152 stores, for example, the posture information PF, the path information TF, and/or the map information MF received from the second mobile robot 20. The storage unit 152 stores, for example, the synthesized map information MA generated by the map information synthesis unit 151e and the like.

### (2-2) Operation

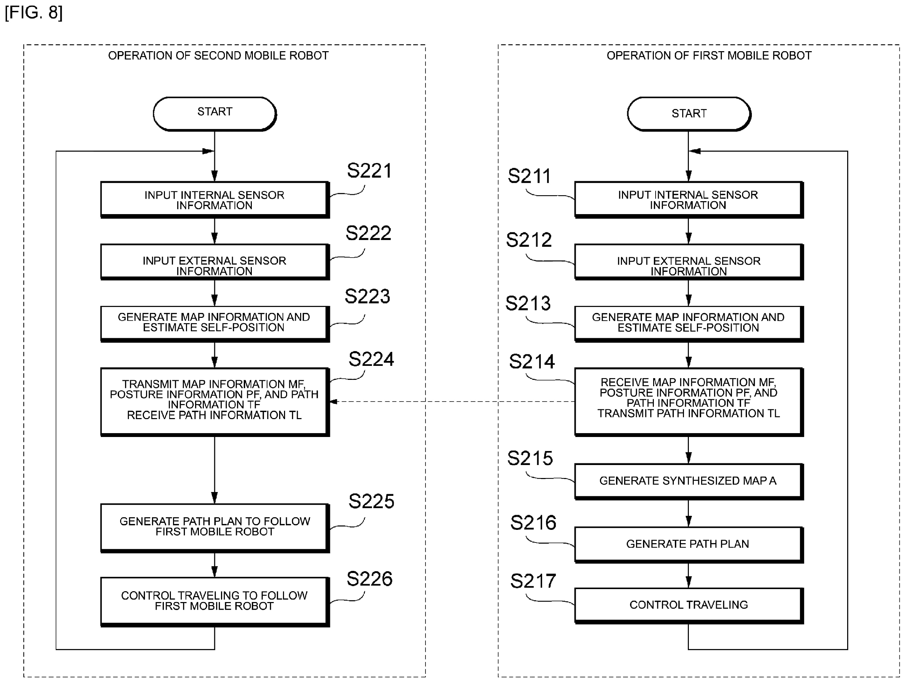

FIG. 8 is a diagram illustrating an example of an operation flow indicating operation performed by the environment map generating system 2 according to the second embodiment. The operation flow includes an operation flow indicating operation performed by the first mobile robot 10 and an operation flow indicating operation performed by the second mobile robot 20.

### (2-2-1) Operation of First Mobile Robot 10

First, the operation performed by the first mobile robot 10 will be described.

First, in step S211, the internal sensor 12 acquires information regarding a position and posture of the first mobile robot 10. Here, the information to acquire may include, for example, absolute values of three direction components of each of a movement distance, a speed, an acceleration, an angular velocity, and posture of the first mobile robot 10, and the like.

Next, in step S212, the external sensor 11 acquires information regarding a surrounding environment of the first mobile robot 10. Here, the information to acquire includes information regarding a position of the surrounding environment, and information regarding a two-dimensional shape or a three-dimensional shape, and color and material.

Next, in step S213, the map generation and self-position estimation unit 151c performs generation of map information and estimation of a self-position of the first mobile robot 10 using the information acquired by the external sensor 11 and the information acquired by the internal sensor 12. As a result, for example, as illustrated in FIG. 4, the posture information PL, the path information TL, and the map information ML for the first mobile robot 10 are generated.

Next, in step S214, the transmission and reception unit 151d receives the posture information PF, the path information TF, and the map information MF for the second mobile robot 20 transmitted from the second mobile robot 20 in step S224. The transmission and reception unit 151d transmits the generated path information TL of the first mobile robot 10 to the second mobile robot 20.

Next, in step S215, the map information synthesis unit 151e generates the synthesized map information MA based on the map information ML generated by the first mobile robot 10 and the map information MF generated by the second mobile robot 20. For example, a known point group matching technique such as an iterative closest point (ICP) algorithm may be used for the synthesis of the map information ML and the map information MF. In the generation of the synthesized map information MA, the posture information PL and the posture information PF may be converted into the same coordinate system. In the generation of the synthesized map information MA, the path information TL and the path information TF may be converted into the same coordinate system. As a result, for example, the synthesized map information MA as illustrated in FIG. 6 is generated.

Next, in step S216, the travel control unit 151b generates a path plan of the first mobile robot 10. For example, the travel control unit 151b may generate the path plan using the map information ML saved in the storage unit 152 and information of the self-position of the first mobile robot 10 estimated by the map generation and self-position estimation unit 151c.

Next, in step S217, the travel control unit 151b controls the travel unit 14 to move the first mobile robot 10 based on the path plan generated in step S216. Thereafter, steps S211 to S217 are repeated until a predetermined end condition is satisfied.

### (2-2-2) Operation of Second Mobile Robot 20

Next, the operation performed by the second mobile robot 20 will be described.

First, in step S221, the internal sensor 22 acquires information regarding a position and posture of the second mobile robot 20. Here, the information to acquire may include, for example, absolute values of three direction components of each of a movement distance, a speed, an acceleration, an angular velocity, and posture of the second mobile robot 20.

Next, in step S222, the external sensor 21 acquires information regarding a surrounding environment of the second mobile robot 20. Here, the information to acquire includes information regarding a position of the surrounding environment, and information regarding a two-dimensional shape or a three-dimensional shape, and color and material.

Next, in step S223, the map generation and self-position estimation unit 251c performs generation of map information and estimation of a self-position of the second mobile robot 20 using the information acquired by the external sensor 21 and the information acquired by the internal sensor 22. As a result, for example, as illustrated in FIG. 5, the posture information PL, the path information TL, and the map information ML for the second mobile robot 20 are generated.

Next, in step S224, the transmission and reception unit 251d transmits the posture information PF, the path information TF, and the map information MF for the second mobile robot 20 that are generated to the first mobile robot 10. The transmission and reception unit 251d receives the path information TL of the first mobile robot 10 transmitted from the first mobile robot 10 in step S214.

Next, in step S225, the travel control unit 251b generates a path plan of the second mobile robot 20. In particular, the travel control unit 251b generates a path plan for causing the second mobile robot 20 to move so as to follow the first mobile robot 10 based on the path information TL of the first mobile robot 10 acquired in step S224.

Next, in step S226, the travel control unit 251b controls the travel unit 24 to move the second mobile robot 20 based on the path plan generated in step S225. At this time, the travel control unit 251b may move the second mobile robot 20 so that the second range 21R in which the external sensor 21 included in the second mobile robot 20 detects an environment includes a range that is not included in the first range 11R in which the external sensor 11 included in the first mobile robot 10 detects the environment. At this time, when the second mobile robot 20 moves so as to follow the first mobile robot 10, the sensor control unit 251a may control the orientation SF of the external sensor 21 and/or the size of the second range 21R so that the second range 21R in which the external sensor 21 included in the second mobile robot 20 detects the environment includes a range that is not included in the first range 11R in which the external sensor 11 included in the first mobile robot 10 detects the environment. Thereafter, steps S221 to S226 are repeated until a predetermined end condition is satisfied.

### (3) Third Embodiment

### (3-1) Formation

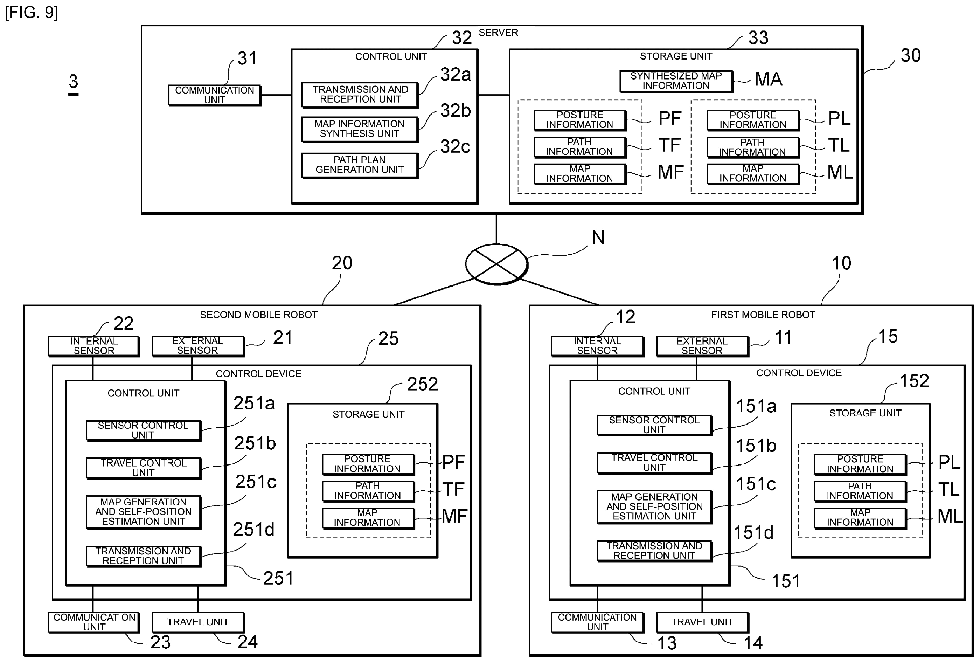

FIG. 9 is a schematic diagram illustrating an example of a functional formation of an environment map generating system 3 according to a third embodiment. Hereinafter, the environment map generating system 3 according to the third embodiment will be described with respect to parts different from those of the environment map generating system 1 according to the first embodiment, and the description of parts similar to those of the environment map generating system 1 according to the first embodiment will be omitted as appropriate.

The environment map generating system 3 according to the third embodiment includes a server 30 in addition to the first mobile robot 10 and the second mobile robot 20. The server 30 is connected to the first mobile robot 10 and the second mobile robot 20 via the communication network N so as to be able to transmit and receive information. In the environment map generating system 3 according to the third embodiment, the server acquires the path information TL of the first mobile robot 10 from the first mobile robot 10, then generates a path plan of the second mobile robot 20 so as to follow the first mobile robot 10, and transmits the path plan to the second mobile robot 20. In the environment map generating system 3 according to the third embodiment, the second mobile robot 20 acquires the map information ML from the first mobile robot 10, acquires the map information MF from the second mobile robot 20, and then generates the synthesized map information MA based on the map information ML and the map information MF.

### (3-1-1) Formation of Server 30

The server 30 is a computer including a central processing unit (CPU), a storage device (composed of a storage device such as a random access memory (RAM), a read only memory (ROM), a hard disk drive (HDD), or a solid state drive (SSD)), and various interfaces. The server 30 includes a communication unit 31, a control unit 32, and a storage unit 33. Some or all of respective functional units included in the control unit 32 described below may be achieved by executing a predetermined program stored in the above-described storage device. Alternatively, some or all of the respective functional units included in the control unit 32 may be achieved by hardware such as a custom IC.

The communication unit 31 is a wireless communication module (also referred to as a communication circuit) for the server 30 to perform wireless communication with other devices such as the first mobile robot 10 and the second mobile robot 20 via the communication network N. Communication standards used for the communication are not particularly limited, and may be, for example, Wi-Fi (trade name), Bluetooth (trade name), or the like.

The control unit 32 includes a transmission and reception unit 32a, a map information synthesis unit 32b, and a path plan generation unit 32c.

The transmission and reception unit 32a performs transmission and reception of information to and from other devices such as the first mobile robot 10 and the second mobile robot 20 via the communication unit 31 and the communication network N. The transmission and reception unit 32a may receive, for example, the posture information PL, the path information TL, and/or the map information ML from the first mobile robot 10. The transmission and reception unit 32a may receive, for example, the posture information PF, the path information TF, and/or the map information MF from the second mobile robot 20. The transmission and reception unit may transmit, for example, a path plan generated by the path plan generation unit 32c to the second mobile robot 20.

The map information synthesis unit 32b generates the synthesized map information MA by, for example, synthesizing the map information ML and the map information MF. For example, a known point group matching technique such as an iterative closest point (ICP) algorithm may be used for the synthesis of the map information ML and the map information MF. In the generation of the synthesized map information MA, the posture information PL and the posture information PF may be converted into the same coordinate system. In the generation of the synthesized map information MA, the path information TL and the path information TF may be converted into the same coordinate system.

The path plan generation unit 32c generates a path plan for the second mobile robot 20. In particular, the path plan generation unit 32c generates a path plan for causing the second mobile robot 20 to move so as to follow the first mobile robot 10. Therefore, the path plan generation unit 32c generates a path plan for the second mobile robot 20 based on, for example, at least the path information TL regarding a path along which the first mobile robot 10 has moved. A method of generating a path plan by the path plan generation unit 32c may be similar to the method of generating a path plan by the travel control unit 251b included in the second mobile robot 20 in the environment map generating system 1 according to the first embodiment.

The storage unit 33 stores, for example, the posture information PL, the path information TL, and/or the map information ML received from the first mobile robot 10. The storage unit 33 stores, for example, the posture information PF, the path information TF, and/or the map information MF received from the second mobile robot 20. The storage unit 33 stores, for example, the synthesized map information MA generated by the map information synthesis unit 32b and the like.

### (3-2) Operation

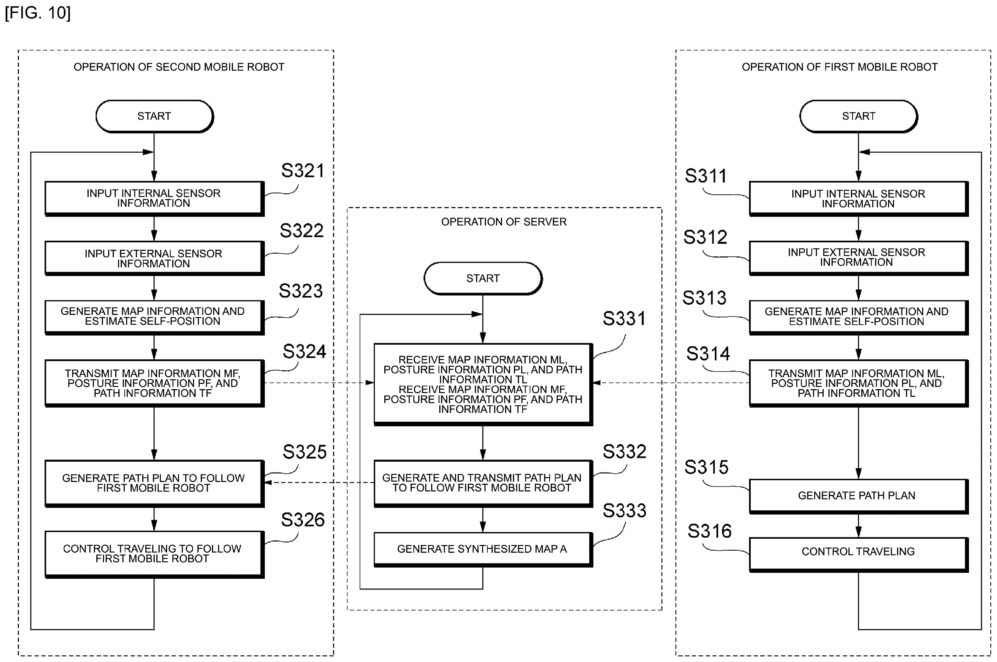

FIG. 10 is a diagram illustrating an example of an operation flow indicating operation performed by the environment map generating system 3 according to the third embodiment. The operation flow includes an operation flow indicating operation performed by the first mobile robot 10, an operation flow indicating operation performed by the second mobile robot 20, and an operation flow indicating operation performed by the server 30.

### (3-2-1) Operation of First Mobile Robot 10

First, the operation performed by the first mobile robot 10 will be described.

First, in step S311, the internal sensor 12 acquires information regarding a position and posture of the first mobile robot 10. Here, the information to acquire may include, for example, absolute values of three direction components of each of a movement distance, a speed, an acceleration, an angular velocity, and posture of the first mobile robot 10, and the like.

Next, in step S312, the external sensor 11 acquires information regarding a surrounding environment of the first mobile robot 10. Here, the information to acquire includes information regarding a position of the surrounding environment, and information regarding a two-dimensional shape or a three-dimensional shape, and color and material.

Next, in step S313, the map generation and self-position estimation unit 151c performs generation of map information and estimation of a self-position of the first mobile robot 10 using the information acquired by the external sensor 11 and the information acquired by the internal sensor 12. As a result, for example, as illustrated in FIG. 4, the posture information PL, the path information TL, and the map information ML for the first mobile robot 10 are generated.

Next, in step S314, the transmission and reception unit 151d transmits the posture information PL, the path information TL, and the map information ML for the first mobile robot 10 that are generated to the server 30.

Next, in step S315, the travel control unit 151b generates a path plan of the first mobile robot 10. For example, the travel control unit 151b may generate the path plan using the map information ML saved in the storage unit 152 and information of the self-position of the first mobile robot 10 estimated by the map generation and self-position estimation unit 151c.

Next, in step S316, a travel control unit 151b1 controls the travel unit 14 to move the first mobile robot 10 based on the path plan generated in step S315. At this time, the travel control unit 251b may move the second mobile robot 20 so that the second range 21R in which the external sensor 21 included in the second mobile robot 20 detects an environment includes a range that is not included in the first range 11R in which the external sensor 11 included in the first mobile robot 10 detects the environment. At this time, when the second mobile robot 20 moves so as to follow the first mobile robot 10, the sensor control unit 251a may control the orientation SF of the external sensor 21 and/or the size of the second range 21R so that the second range 21R in which the external sensor 21 included in the second mobile robot 20 detects the environment includes a range that is not included in the first range 11R in which the external sensor 11 included in the first mobile robot 10 detects the environment. Thereafter, steps S311 to S316 are repeated until a predetermined end condition is satisfied.

### (3-2-2) Second Mobile Robot 20

Next, the operation performed by the second mobile robot 20 will be described.

First, in step S321, the internal sensor 22 acquires information regarding a position and posture of the second mobile robot 20. Here, the information to acquire may include, for example, absolute values of three direction components of each of a movement distance, a speed, an acceleration, an angular velocity, and posture of the second mobile robot 20.

Next, in step S322, the external sensor 21 acquires information regarding a surrounding environment of the second mobile robot 20. Here, the information to acquire includes information regarding a position of the surrounding environment, and information regarding a two-dimensional shape or a three-dimensional shape, and color and material.

Next, in step S323, the map generation and self-position estimation unit 251c performs generation of map information and estimation of a self-position of the second mobile robot 20 using the information acquired by the external sensor 21 and the information acquired by the internal sensor 22. As a result, for example, as illustrated in FIG. 5, the posture information PL, the path information TL, and the map information ML for the second mobile robot 20 are generated.

Next, in step S324, the transmission and reception unit 251d transmits the posture information PF, the path information TF, and the map information MF for the second mobile robot 20 that are generated to the server.

Next, in step S325, the transmission and reception unit 251d receives the path plan (the path plan for causing the second mobile robot 20 to move so as to follow the first mobile robot 10) transmitted from the server in step S332.

Next, in step S326, the travel control unit 251b controls the travel unit 24 to move the second mobile robot 20 based on the path plan acquired in step S325. Thereafter, steps S321 to S326 are repeated until a predetermined end condition is satisfied.

### (3-2-3) Operation of Server 30

Next, operation performed by the server 30 will be described.

First, in step S331, the transmission and reception unit 32a receives the posture information PL, the path information TL, and the map information ML for the first mobile robot 10 transmitted from the first mobile robot 10 in step S314. The transmission and reception unit 32a receives the posture information PF, the path information TF, and the map information MF for the second mobile robot 20 transmitted from the second mobile robot 20 in step S324.

Next, in step S332, the path plan generation unit 32c generates a path plan of the second mobile robot 20. In particular, the path plan generation unit 32c generates a path plan for causing the second mobile robot 20 to move so as to follow the first mobile robot 10 based on the path information TL of the first mobile robot 10 acquired from the first mobile robot 10 in step S314. The transmission and reception unit 32a transmits the path plan generated by the path plan generation unit 32c to the second mobile robot 20.

Next, in step S333, the map information synthesis unit 32b generates the synthesized map information MA based on the map information ML generated by the first mobile robot 10 and the map information MF generated by the second mobile robot 20. For example, a known point group matching technique such as an iterative closest point (ICP) algorithm may be used for the synthesis of the map information ML and the map information MF. In the generation of the synthesized map information MA, the posture information PL and the posture information PF may be converted into the same coordinate system. In the generation of the synthesized map information MA, the path information TL and the path information TF may be converted into the same coordinate system. As a result, for example, the synthesized map information MA as illustrated in FIG. 6 is generated. Thereafter, steps S331 to S333 are repeated until a predetermined end condition is satisfied.

### (4) Fourth Embodiment

### (4-1) Formation

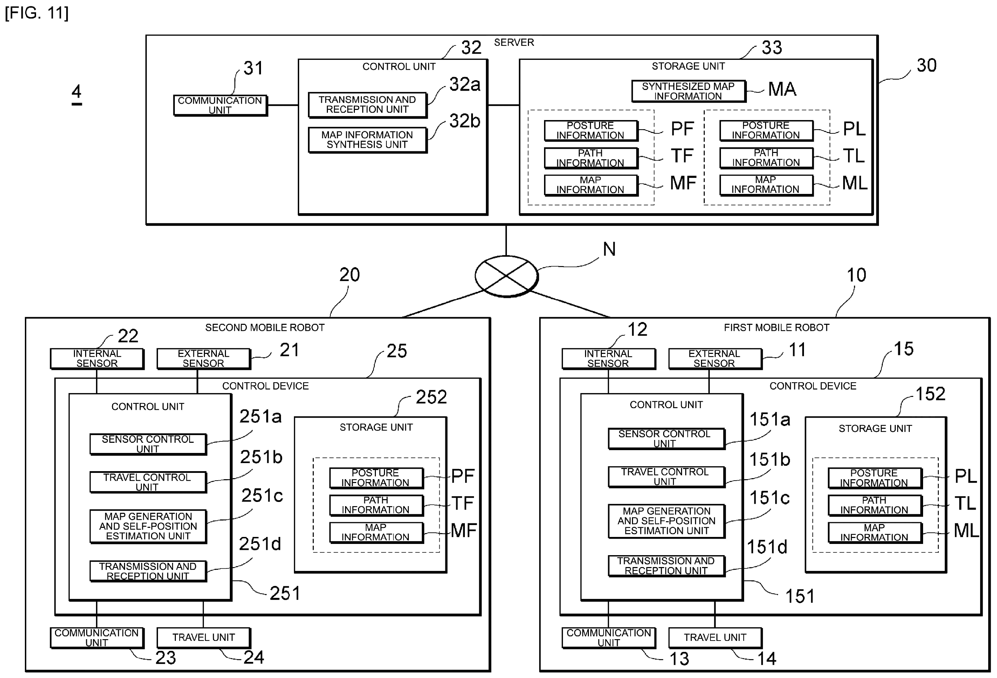

FIG. 11 is a schematic diagram illustrating an example of a functional formation of an environment map generating system 4 according to a fourth embodiment. Hereinafter, the environment map generating system 4 according to the fourth embodiment will be described with respect to parts different from those of the environment map generating system according to the third embodiment, and the description of parts similar to those of the environment map generating system according to the third embodiment will be omitted as appropriate.

In the environment map generating system 4 according to the fourth embodiment, the second mobile robot 20 includes a second external sensor 26. In the environment map generating system 4 according to the fourth embodiment, the second mobile robot 20 detects the first mobile robot 10 by the second external sensor 26, and generates position information indicating a position of the first mobile robot 10 based on a result of the detection. The second mobile robot 20 generates a path plan for the second mobile robot 20 to move based on the position information indicating the position of the first mobile robot 10, and moves based on the path plan.

### (4-1-1) First Mobile Robot 10

The second mobile robot 20 includes the second external sensor 26. The second external sensor 26 is a sensor that detects information regarding a surrounding environment of the second mobile robot 20. The second external sensor 26 detects, for example, information regarding a position of the surrounding environment, a two-dimensional shape or a three-dimensional shape, and color and material. The second external sensor 26 may be composed of a sensor such as a laser range finder (LRF), a laser imaging detection and ranging (LIDAR), a camera, a depth camera, a stereo camera, a sonar, or a RADAR, or a combination of all of these. The number and disposition positions of the second external sensors 26 included in the second mobile robot 20 are not particularly limited. The second external sensor 26 may be disposed at an optional position such as a front side, a rear side, or a side surface side of the second mobile robot 20.

The sensor control unit 251a included in the second mobile robot 20 forms a third detection unit together with the second external sensor 26 and generates a detection result, based on a detection signal supplied from the second external sensor 26, indicating that the second external sensor 26 has detected the first mobile robot 10. The sensor control unit 251a may generate a detection result of the first mobile robot 10 by, for example, performing feature amount analysis or the like on the detection signal supplied from the second external sensor 26. The detection result may include, for example, position information of the first mobile robot 10, a distance to the first mobile robot 10, a direction of the first mobile robot 10, and the like. The sensor control unit 251a may further use the position information (self-position) of the second mobile robot 20 in the calculation of the detection result of the first mobile robot 10.

The travel control unit 251b included in the second mobile robot 20 generates a path plan for the second mobile robot 20 to move so as to follow the first mobile robot 10 based on the detection result of the first mobile robot 10. A method of generating the path plan is not particularly limited, but may be, for example, proportional integral-differential (PID) control, pure-pursuit control, or the like.

When generating the path plan of the second mobile robot 20, the travel control unit 251b may generate a path plan such that an angle between an orientation of the second external sensor 26 and the orientation of the second mobile robot 20 is less than a predetermined threshold value. The travel control unit 251b may change the predetermined threshold value based on various parameters. For example, the travel control unit 251b may change the predetermined threshold value according to a mode set by the user (a mode regarding accuracy of an environment map to be generated, or the like). For example, the travel control unit 251b may change the predetermined threshold value according to the generated and acquired data (for example, the posture information PF, the path information TF, the map information MF, the posture information PL, the path information TL, the map information ML, and the synthesized map information MA).

### (4-2) Operation

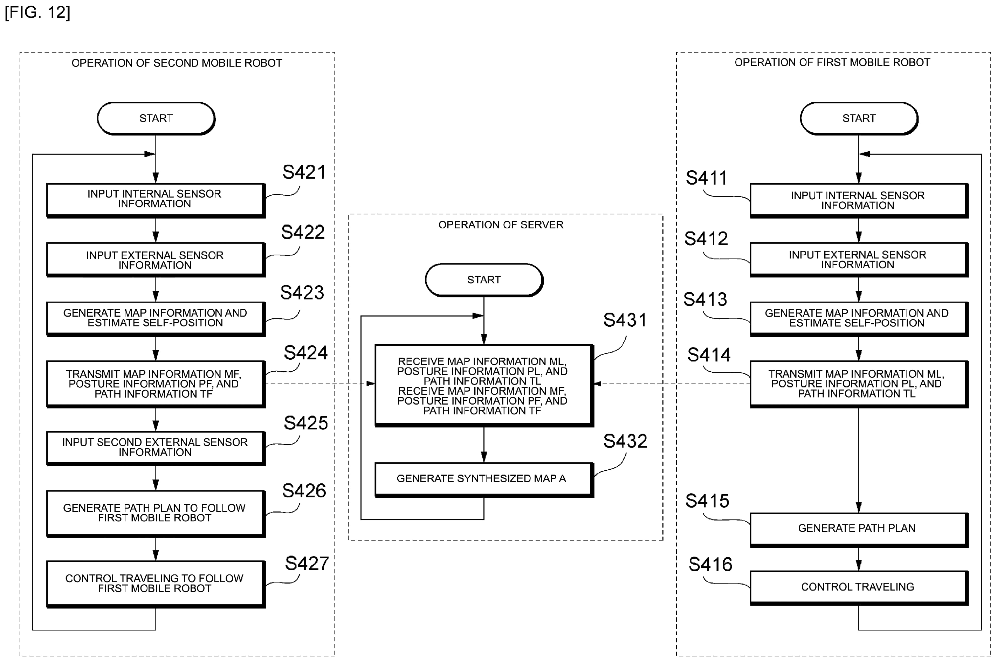

FIG. 12 is a diagram illustrating an example of an operation flow indicating operation performed by the environment map generating system 4 according to the fourth embodiment. The operation flow includes an operation flow indicating operation performed by the first mobile robot 10, an operation flow indicating operation performed by the second mobile robot 20, and an operation flow indicating operation performed by the server 30.

### (4-2-1) Operation of First Mobile Robot 10

The operation performed by the first mobile robot 10 is similar to the operation (FIG. 10) performed by the first mobile robot 10 of the environment map generating system according to the third embodiment, and thus the description thereof will be omitted.

### (4-2-2) Operation of Second Mobile Robot 20

Next, the operation performed by the second mobile robot 20 will be described.

First, in step S421, the internal sensor 22 acquires information regarding a position and posture of the second mobile robot 20. Here, the information to acquire may include, for example, absolute values of three direction components of each of a movement distance, a speed, an acceleration, an angular velocity, and posture of the second mobile robot 20.

Next, in step S422, the external sensor 11 acquires information regarding a surrounding environment of the second mobile robot 20. Here, the information to acquire includes information regarding a position of the surrounding environment, and information regarding a two-dimensional shape or a three-dimensional shape, and color and material.

Next, in step S423, the map generation and self-position estimation unit 251c performs generation of map information and estimation of a self-position of the second mobile robot 20 using the information acquired by the external sensor 11 and the information acquired by the internal sensor 22. As a result, for example, as illustrated in FIG. 5, the posture information PF, the path information TF, and the map information MF for the second mobile robot 20 are generated.

Next, in step S424, the transmission and reception unit 251d transmits the posture information PF, the path information TF, and the map information MF for the second mobile robot 20 that are generated to the server.

Next, in step S425, the second external sensor 26 acquires information regarding the surrounding environment of the second mobile robot 20. The sensor control unit 251a generates a detection result of the first mobile robot 10 based on a detection signal supplied from the second external sensor 26.

Next, in step S426, the travel control unit 251b generates a path plan for the second mobile robot 20 to move so as to follow the first mobile robot 10 based on the detection result of the first mobile robot 10.

Next, in step S427, the travel control unit 251b controls the travel unit 24 to move the second mobile robot 20 based on the path plan generated in step S426. At this time, the travel control unit 251b may move the second mobile robot 20 so that the second range 21R in which the external sensor 21 included in the second mobile robot 20 detects an environment includes a range that is not included in the first range 11R in which the external sensor 11 included in the first mobile robot 10 detects the environment. At this time, when the second mobile robot 20 moves so as to follow the first mobile robot 10, the sensor control unit 251a may control the orientation SF of the external sensor 21 and/or the size of the second range 21R so that the second range 21R in which the external sensor 21 included in the second mobile robot 20 detects the environment includes a range that is not included in the first range 11R in which the external sensor 11 included in the first mobile robot 10 detects the environment. Thereafter, steps S421 to S427 are repeated until a predetermined end condition is satisfied.

### (4-2-3) Operation of Server

Next, operation performed by the server 30 will be described.

First, in step S431, the transmission and reception unit 32a receives the posture information PL, the path information TL, and the map information ML for the first mobile robot 10 transmitted from the first mobile robot 10 in step S414. The transmission and reception unit 32a receives the posture information PF, the path information TF, and the map information MF for the second mobile robot 20 transmitted from the second mobile robot 20 in step S424.

Next, in step S432, the map information synthesis unit 32b generates the synthesized map information MA based on the map information ML generated by the first mobile robot 10 and the map information MF generated by the second mobile robot 20. For example, a known point group matching technique such as an iterative closest point (ICP) algorithm may be used for the synthesis of the map information ML and the map information MF. In the generation of the synthesized map information MA, the posture information PL and the posture information PF may be converted into the same coordinate system. In the generation of the synthesized map information MA, the path information TL and the path information TF may be converted into the same coordinate system. As a result, for example, the synthesized map information MA as illustrated in FIG. 6 is generated. Thereafter, steps S431 to S432 are repeated until a predetermined end condition is satisfied.

The above-described embodiment is provided for facilitating understanding of the present invention, and is not intended to limit the interpretation of the present invention. Each element included in the embodiment as well as the arrangement, material, condition, shape, size, and the like of each element are not limited to those exemplified and may be changed appropriately. The configurations described in different embodiments can be partially replaced or combined.

### REFERENCE SIGNS

1, 2, 3, 4 Environment map generating system, 10 First mobile robot, 11 External sensor, 12 Internal sensor, 13 Communication unit, 14 Travel unit, 15 Control device, 151 Control unit, 152 Storage unit, 151a Sensor control unit, 151b Travel control unit, 151c Map information generation and self-position estimation unit, 151d Transmission and reception unit, 151e Map information synthesis unit, 21 External sensor, 22 Internal sensor, 23 Communication unit, 24 Travel unit, 25 Control device, 251 Control unit, 252 Storage unit, 251a Sensor control unit, 251b Travel control unit, 251c Map information generation and self-position estimation unit, 251d Transmission and reception unit, 251e Map information synthesis unit, 26 Second external sensor, 30 Server, 31 Communication unit, 32 Control unit, 33 Storage unit, 32 Control unit, 32a Transmission and reception unit, 32b Map information synthesis unit, 32c Path plan generation unit

## Claims

1. A method of generating an environment map by controlling a first mobile robot that is movable and provided with a first detection unit for detecting an environment and generating first environment information and a second mobile robot that is movable and provided with a second detection unit for detecting an environment and generating second environment information, the method comprising:
causing the first mobile robot to move;
generating first environment information by causing the first detection unit of the first mobile robot to detect an environment while the first mobile robot is moving;
causing the second mobile robot to move so as to follow the first mobile robot;
generating the second environment information by causing the second detection unit of the second mobile robot to detect an environment while the second mobile robot is moving; and
generating an environment map based on the first environment information and the second environment information.

2. The method according to claim 1, wherein
the first detection unit is configured to generate the first environment information by detecting an environment in a direction of a first range with respect to the first detection unit, and
the second detection unit is configured to generate the second environment information by detecting an environment in a direction of a second range with respect to the second detection unit.

3. The method according to claim 2, wherein in the step of generating the second environment information, the second range includes a range that is not included in the first range.

4. The method according to claim 1, wherein
the step of causing the second mobile robot to move so as to follow the first mobile robot includes
acquiring path information regarding a path along which the first mobile robot has moved,
generating a path plan for the second mobile robot to move based on the path information, and
causing the second mobile robot to move based on the path plan.

5. The method according to claim 4, wherein
in the step of acquiring path information regarding a path along which the first mobile robot has moved, the second mobile robot acquires the path information, and
in the step of generating a path plan for the second mobile robot to move based on the path information, the second mobile robot generates the path plan.

6. The method according to claim 1, wherein
in the step of generating an environment map based on the first environment information and the second environment information,
the second mobile robot acquires the first environment information from the first mobile robot,
the second mobile robot acquires the second environment information from the second detection unit, and
the second mobile robot generates the environment map based on the first environment information and the second environment information, both of which are acquired.

7. The method according to claim 1, wherein
in the step of generating an environment map based on the first environment information and the second environment information,
the first mobile robot acquires the second environment information from the second mobile robot,
the first mobile robot acquires the first environment information from the first detection unit, and
the first mobile robot generates the environment map based on the first environment information and the second environment information, both of which are acquired.

8. The method according to claim 4, wherein
in the step of acquiring path information regarding a path along which the first mobile robot has moved, a server acquires the path information,
in the step of generating a path plan for the second mobile robot to move based on the path information, the server generates the path plan, and
the method further includes causing the server to transmit the path plan to the second mobile robot.

9. The method according to claim 1, wherein
in the step of generating an environment map based on the first environment information and the second environment information,
the server acquires the first environment information from the first mobile robot,
the server acquires the second environment information from the second mobile robot, and
the server generates the environment map based on the first environment information and the second environment information, both of which are acquired.

10. The method according to claim 1, wherein
the step of causing the second mobile robot to move so as to follow the first mobile robot includes
causing a third detection unit provided in the second mobile robot to detect the first mobile robot,
generating a path plan for the second mobile robot to move based on a detection result of the third detection unit, and
causing the second mobile robot to move based on the path plan.

11. The method according to claim 10, wherein the detection result includes position information indicating a position of the first mobile robot.

12. A system, comprising:
a first mobile robot that is movable and provided with a first detection unit for detecting an environment and generating first environment information;
a second mobile robot that is movable and provided with a second detection unit for detecting an environment and generating second environment information;
a first movement control unit configured to control the first mobile robot to move;
a first detection control unit configured to control the first detection unit of the first mobile robot to detect an environment while the first mobile robot is moving and to generate the first environment information;
a second movement control unit configured to control the second mobile robot to move so as to follow the first mobile robot;
a second detection control unit configured to control the second detection unit of the second mobile robot to detect an environment while the second mobile robot is moving and to generate the second environment information; and
an environment map generation unit configured to generate an environment map based on the first environment information and the second environment information.

13. A mobile robot that is movable and provided with a detection unit for detecting an environment and generating environment information, the mobile robot comprising:
a movement control unit configured to control the mobile robot to move so as to follow another mobile robot, the other mobile robot being provided with another detection unit for detecting an environment and generating another environment information and being configured to be movable;
a detection control unit configured to control the detection unit of the moving mobile robot to generate the environment information while the mobile robot is moving; and
a supply unit configured to supply the environment information generated to an environment map generation unit for generating an environment map based on the environment information and the other environment information.
